# FASCICULE DE BREVET EUROPEEN

(11) **EP 1 305 157 B1**
(45) Date de publication et mention de la délivrance du brevet: **31.03.2004**
(21) Numéro de dépôt: 01974084.4
(22) Date de dépôt: 20.07.2001
(51) Int. Cl.: B29D 29/08, B29C 43/50

(54) **PROCEDE DE FABRICATION D'UNE CHENILLE ET DISPOSITIF DE DEMOULAGE**
VERFAHREN ZUR HERSTELLUNG EINER RAUPENKETTE UND ENTFORMUNGSVORRICHTUNG
METHOD FOR MAKING A CRAWLER AND STRIPPING DEVICE

(30) Priorité: 24.07.2000 FR 0009701
(43) Date de publication de la demande: 02.05.2003
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: MENARD, Gilbert, F-63530 Volvic (FR); GAUTHIER, Gilbert, F-63800 Cournon-D'Auvergne (FR)
(74) Mandataire: Diernaz, Christian
(86) Numéro de dépôt international: PCT/EP2001/008428
(87) Numéro de publication internationale: WO 2002/007956

(56) Documents cités:
- WO-A-91/04145
- US-A- 4 066 732
- US-A- 4 246 055
- US-A- 6 086 811
- DATABASE WPI Week 9722 Derwent Publications Ltd., London, GB; AN 1997-240449 XP002165045 -& JP 09 076369 A (BRIDGESTONE) cité dans la demande

## Description

L'invention concerne un procédé de fabrication et moulage de chenilles en matériau élastomérique; elle concerne également un dispositif de démoulage de telles chenilles.

L'utilisation de chenilles se développe dans de nombreux secteurs, notamment celui des tracteurs agricoles ou autres engins de génie civil pour lesquels les conditions de roulage mixte (à la fois sur sols meubles et sur route) conduisent à des exigences grandissantes de qualité desdites chenilles ainsi qu'à des coûts industriels réduits.

Dans ce qui suit on désigne par matériau élastomérique un matériau comportant au moins un élastomère pouvant être renforcé par au moins une charge de renforcement comme par exemple du noir de carbone; les élastomères diéniques, les polyuréthannes ainsi que les caoutchoucs thermoplastiques, entre autres, sont des exemples de matériaux élastomériques.

Pour réaliser une chenille renforcée dans sa direction circonférentielle par des fils ou câbles et pourvue sur sa surface extérieure d'une sculpture formée d'éléments en relief destinés à faciliter la progression sur les terrains meubles, et pourvue d'une série de plots d'entraînement en relief sur sa surface intérieure pour coopérer avec un moyen d'entraînement approprié, on peut mettre en oeuvre, en l'aménageant, un procédé de réalisation d'une courroie d'entraînement formée d'une ceinture de gomme renforcée et pourvue sur sa surface externe de motifs en relief.

Par exemple, le document canadien n°898672 décrit une méthode selon laquelle dans un premier temps la ceinture est réalisée par enroulement sur un tambour formé d'éléments, et dans un deuxième temps, ce tambour portant la ceinture est positionné à l'intérieur d'un moule composé d'une pluralité de secteurs mobiles radialement pour mouler les motifs de relief sur l'extérieur de la courroie. Ce procédé présente l'inconvénient de nécessiter une réalisation complexe d'un tambour dont les éléments doivent être escamotables après moulage et vulcanisation de la courroie pour permettre le démoulage de ladite courroie après moulage.

Dans le document japonais JP09/076369, il est décrit un procédé de fabrication dans lequel le tambour interne est formé de deux demi-formes cylindriques symétriques et pouvant être déplacées axialement l'une par rapport à l'autre pour effectuer le démoulage d'une chenille après moulage et vulcanisation sur ce tambour. Dans la position de fabrication d'une chenille, ce tambour après assemblage des demi-formes présente une surface radialement externe sur laquelle est réalisée la chenille. Cette surface de posé est pourvue d'une pluralité de cavités destinées au moulage des plots d'entraînement de la chenille; le plan de joint des demi-formes cylindriques est localisé au milieu axialement des cavités de moulage des plots. Après remplissage desdites cavités avec un mélange, on procède à la mise en place des armatures de renforcement de la chenille conjointement avec les couches de mélanges de matériaux élastomériques appropriés. Enfin, on vient coiffer cette ébauche de chenille dans son état non moulé et non vulcanisé avec une pluralité d'éléments de moule portant sur leur surface radialement intérieure des creux préalablement remplis de mélange pour mouler la bande de roulement de la chenille.

Ce procédé présente un certain nombre d'inconvénients parmi lesquels :
- il est impératif de déterminer avec une très grande précision les volumes de mélanges et des armatures, dès lors que le volume de moulage délimité par le moule externe et le tambour cylindrique de base (jouant le rôle de moule interne) règle très précisément le volume de la chenille à mouler et que les mélanges d'élastomères employés sont par nature incompressibles;
- l'avancée des différents éléments du moule externe nécessite une mécanique très précise pour éviter d'avoir des zones de surépaisseur ou des zones de moulage imparfait lorsque les creux dudit moule externe ne sont pas remplis avant d'être appliqués contre la ceinture;
- au cours du démoulage de la chenille hors du moule interne par écartement axial des deux demi-formes constitutives dudit moule, la chenille suit de manière aléatoire l'une ou l'autre desdites demi-formes, ce qui n'est pas commode dans un environnement industriel où l'on doit manipuler cette chenille de grande dimension et de masse importante sans savoir *a priori* de quel côté du tambour la prendre pour la déplacer.

Le document americain US 6 086 811-A décrit un procédé et un dispositif pour la fabrication et le moulage de chenilles en matériau élastomérique.

Le procédé décrit dans ce document présente aussi l'inconvénient mentionné ci-dessus, c'est à dire que l'on ne peut pas savoir à priori de quel côté du tambour de moulage la chenille sera supportée pendant le démoulage.

Il existe en conséquence un besoin de développer un procédé de fabrication d'une chenille de grandes dimensions qui assure une très bonne qualité de réalisation de ladite chenille (en particulier absence de défaut de moulage) pour lequel les inconvénients qui viennent d'être évoqués sont supprimés.

Selon l'invention, il est proposé un procédé de fabrication d'une chenille formée d'une ceinture continue dans la direction circonférentielle en matériau élastomérique comportant au moins une armature de renforcement dont les renforts, sous forme de fils ou câbles, sont disposés parallèlement les uns aux autres et sont sensiblement alignés avec la direction circonférentielle de la chenille, la ceinture ayant une surface intérieure et une surface extérieure, la surface extérieure étant pourvue d'une sculpture formée d'éléments de relief destinés à être en contact avec le sol, la surface intérieure étant pourvue d'une pluralité de plots d'entraînement régulièrement agencés dans la direction circonférentielle.

Le procédé selon l'invention comporte les étapes suivantes :
(a) assemblage d'un moule interne formé par une première et une seconde demi-formes cylindriques de même axe, lesdites deux demi-formes pouvant être déplacées l'une par rapport à l'autre dans la direction axiale pour venir en contact l'une sur l'autre selon une surface de joint et former une surface de pose radialement à l'extérieur du moule interne destinée au moulage de la surface radialement interne de la chenille, cette surface de pose étant pourvue d'une pluralité de cavités régulièrement espacées pour le moulage des plots d'entraînement, chaque cavité étant délimitée dans la direction axiale par une première et une seconde parois latérales, la première paroi latérale appartenant à la première des demi-formes et la seconde paroi latérale appartenant à la seconde des demi-formes, la surface de joint des deux demi-formes étant, sur la surface de pose, axialement plus proche de la première paroi latérale que de la seconde paroi latérale;
(b) remplissage des cavités avec au moins un mélange approprié pour former les plots d'entraînement;
(c) pose des constituants de la ceinture (mélanges d'élastomère et armatures de renforcement) sur le moule interne et radialement à l'extérieur des plots pour assurer un contact entre mélange de la ceinture et mélange des plots ;
(d) pose du mélange de bande de roulement de la chenille radialement à l'extérieur de la ceinture pour terminer l'ébauche de chenille;
(e) transfert de l'ébauche de chenille portée par le moule interne et mise en place à l'intérieur d'un moule extérieur formé d'une pluralité de secteurs, lesdits secteurs présentant, en position de moulage, une surface de moulage radialement interne pour le moulage de la sculpture de la chenille, chaque secteur étant constitué d'une pluralité d'éléments ;
(f) fermeture du moule extérieur par rapprochement radial vers l'axe de rotation des différents secteurs du moule externe pour le moulage et la vulcanisation de la chenille,
(g) après moulage et vulcanisation, ouverture radiale des secteurs du moule extérieur,
(h) transfert du moule interne portant la chenille moulée et vulcanisée jusqu'à un dispositif de désassemblage des demi-formes et démoulage de la chenille;
(i) immobilisation axiale de l'une des demi-formes du moule interne et déplacement dans le sens axial de l'autre demi-forme pour l'éloigner axialement de la demi-forme immobilisée jusqu'à séparation complète, la chenille restant solidaire de la seconde demi-forme;
(j) immobilisation de la chenille et déplacement axial de la seconde demi-forme pour effectuer le démoulage de la chenille par coulissement de celle-ci par rapport à ladite demi-forme.

La surface de joint des deux demi-formes est dite "plus proche de la première paroi latérale que de la seconde paroi latérale" dès lors qu'elle ne passe pas par le plan médian des cavités destinées au moulage des plots d'entraînement (le plan médian des cavités étant le plan perpendiculaire à l'axe du moule et divisant dans le sens axial chaque cavité en deux parties sensiblement égales). Préférentiellement, la distance entre la surface de joint et le plan médian des cavités formées sur le moule interne est supérieure à la moitié de la distance entre ce plan médian et la première des surfaces latérales des cavités sur la première demi-forme. De manière avantageuse, cette surface de joint est tangente à la première des surfaces latérales des cavités sur la première demi-forme.

Le fait de positionner la surface de joint des deux demi-formes constituant le moule interne en dehors du plan médian des cavités formées sur le moule interne (dans la configuration d'assemblage pour la fabrication d'une chenille) permet de maintenir de façon systématique la chenille sur la seconde demi-forme au cours de l'opération de démoulage et donc de faciliter l'agencement de l'atelier de fabrication en conséquence.

Le remplissage des cavités du moule interne peut être effectué par apport manuel d'ébauches de plots fabriqués sur un poste spécifique.

Avantageusement, le remplissage desdites cavités peut être réalisé par extrusion ou injection de mélange à l'intérieur des cavités de moulage des plots d'entraînement avant la pose des armatures et autres mélanges constituant la ceinture de la chenille. Ce remplissage par extrusion ou injection permet d'éviter des opérations toujours délicates de manipulation et d'avivage des surfaces de contact entre mélanges différents pour maintenir un collage à cru satisfaisant entre le mélange des plots et le mélange de l'armature disposé radialement au-dessus.

Selon une variante de l'invention permettant d'optimiser le temps de cycle du procédé, le poste d'extrusion ou injection du mélange dans les cavités est confondu avec le poste de démoulage, de telle façon que la confection d'une nouvelle chenille puisse commencer immédiatement après le démoulage de la chenille précédente, alors que le refroidissement des deux demi-formes n'est pas achevé.

Par ailleurs et de façon à limiter les flux parasites de gomme pouvant former des défauts de moulage comme des bavures au cours de l'opération de moulage tout en réduisant la sensibilité aux dispersions de volume entre les ébauches crues de chenille à mouler et à vulcaniser successivement dans le même moule, il est judicieux de prévoir que les éléments des secteurs du moule externe soient mobiles individuellement, selon une direction de rapprochement ou d'éloignement de l'axe du moule au moins sur une course finale de moulage, lesdits éléments étant également mobiles circonférentiellement les uns par rapport aux autres au moins pendant qu'ils se déplacent le long de ladite course. Cette dernière disposition permet de préserver l'intégrité du moule externe en évitant toute détérioration prématurée au cours de l'opération de moulage.

Suivant cette variante de l'invention, on peut considérer que le mouvement des éléments du moule externe est très sensiblement radial en toutes positions circonférentielles à la surface de moulage desdits éléments.

Suivant une autre variante avantageuse, le moule extérieur comporte des moyens assurant une répulsion élastique entre les éléments des secteurs afin d'assurer que ces éléments restent tous à équidistance les uns des autres. Une forme de réalisation consiste à réaliser sur les faces transversales de chaque élément dans le sens circonférentiel des logements pouvant recevoir chacun un organe capable d'assurer une force de répulsion entre éléments.

L'avantage procuré par ce type de moule combiné avec la fabrication d'une ébauche crue de chenille sur un moule interne rigide réside dans le fait qu'il est conféré au moule externe une certaine élasticité, c'est-à-dire une certaine capacité à augmenter légèrement le volume de la cavité de moulage pour suivre la dilatation des matériaux élastomériques résultant de la montée en température et par exemple à partir d'un seuil de la pression de moulage prédéterminé, tout en répartissant parfaitement les jeux entre pièces dudit moule externe.

De manière également avantageuse, l'une au moins des deux demi-formes constituant le moule interne comporte des moyens appropriés de serrage élastique permettant de maintenir en contact les première et la seconde demi-formes pendant toutes les opérations de confection d'une ébauche de chenille et de moulage. Par moyens de serrage élastique, on entend un moyen ou une pluralité de moyens assurant la tenue mécanique de l'assemblage des demi-formes tout en permettant la prise d'un jeu approprié et uniforme entre lesdites demi-formes pendant le moulage et la vulcanisation dès qu'un seuil de pression de moulage, choisi au préalable, est atteint dans la gomme formant les plots. Ces moyens de serrage sont libérés après vulcanisation d'une chenille pour permettre la séparation des deux demi-formes et le démoulage de la chenille.

La combinaison des dispositions précédentes permet de réaliser un moulage de grande qualité tout en évitant la détérioration des moules externe ou interne qui pourrait résulter d'une élévation non maîtrisée de la pression due à la dilatation des mélanges pendant ledit moulage.

Pour réaliser le démoulage de la chenille hors du moule interne après démoulage du moule externe, il est proposé un dispositif de démoulage comprenant :
- un bâti reposant sur le sol de l'atelier de fabrication, pour recevoir le moule interne pourvu d'une chenille après moulage de cette dernière,
- des premiers et seconds moyens de blocage et un moyen de préhension,
- lesdits premiers moyens de blocage étant prévus sur le bâti pour positionner axialement la première demi-forme du moule interne et limiter son déplacement axial par rapport au bâti,
- lesdits seconds moyens de blocage étant prévus sur le bâti pour déterminer la position axiale d'une chenille vulcanisée et limiter son déplacement axial par rapport au bâti,
- le moyen de préhension permettant, une fois le moule interne avec la chenille vulcanisée en place sur le dispositif et les premiers moyens de blocage bloquant le déplacement axial de la première demi-forme dudit moule, de déplacer la seconde demi-forme pour l'écarter axialement de la première demi-forme et dégager ladite seconde demi-forme de la chenille, ladite chenille étant bloquée axialement par lesdits seconds moyens de blocage.

Dans une variante, le moule interne est monté sur le bâti de façon que son axe soit vertical, la première demi-forme étant située verticalement au dessus de la seconde demi-forme. Dans ce cas, les premiers moyens de blocage sont adaptés pour limiter la descente gravitaire de la première demi-forme vers le bâti, les seconds moyens de blocage sont adaptés pour limiter la descente gravitaire de la chenille vers le bâti et la désolidariser de la seconde demi-forme.

Ce même dispositif est avantageusement utilisé pour assembler les première et seconde demi-formes de façon à former le moule interne en vu de la confection d'une nouvelle chenille.

D'autres caractéristiques et avantages de l'invention ressortent de la description faite ci-après en référence aux figures suivantes qui illustrent les étapes du procédé de fabrication d'une chenille de grandes dimensions destinée entre autre à équiper un véhicule de type agricole ou génie civil.
La figure 1 montre une vue en plan d'une partie de la surface de moulage du moule interne dans la position de mise en place de la gomme formant les plots d'entraînement;
La figure 2 montre, en coupe axiale, le moule interne après réunion des deux demi-formes et avant la pose des constituants de l'ébauche de chenille ;
La figure 3 montre, en coupe axiale, un moule interne après pose d'une partie seulement des constituants d'une ébauche de chenille;
La figure 4 montre, en coupe axiale, le moule interne de la figure 3 après la phase de démoulage de la première demi-forme;
Les figures 5 à 8 présentent les différentes étapes de démoulage d'une chenille hors du moule intérieur au moyen d'un dispositif de démoulage selon l'invention;
La figure 9 montre, en coupe radiale une vue agrandie de la chenille au cours du démoulage;
La figure 10 montre, en coupe circonférentielle et partiellement, deux secteurs du moule externe, un des secteurs étant représenté en position de fermeture pour le moulage et la vulcanisation d'une chenille, un autre secteur étant représenté en position d'ouverture;
La figure 11 montre, en coupe axiale, une vue schématique des moyens de serrage élastique prévus entre les première et seconde demi-formes formant le moule interne selon l'invention.

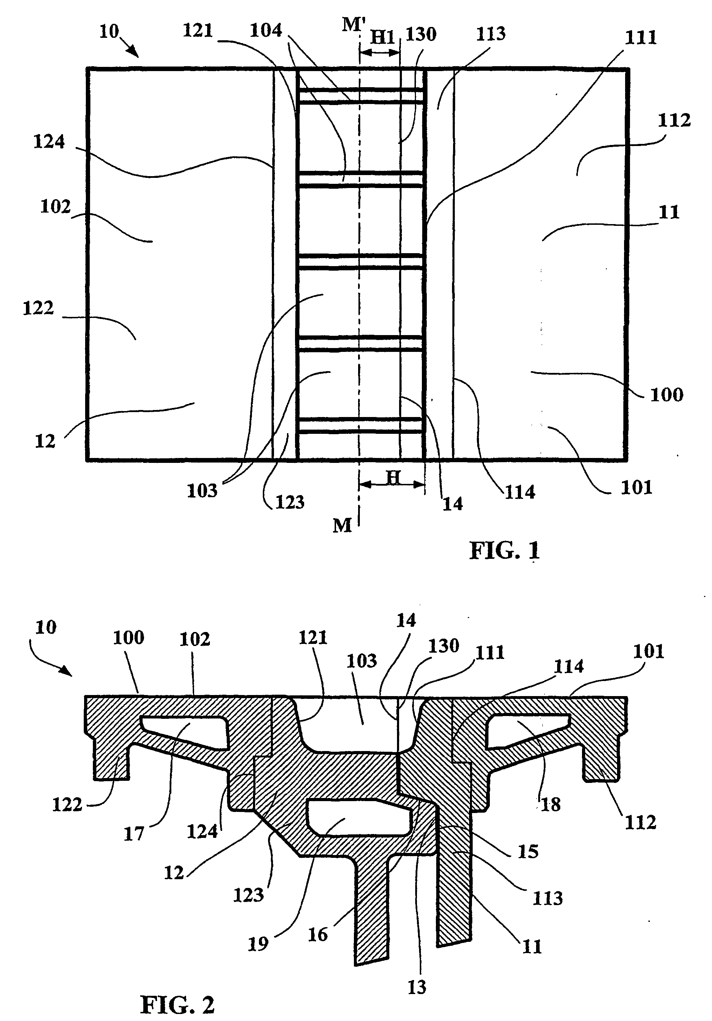

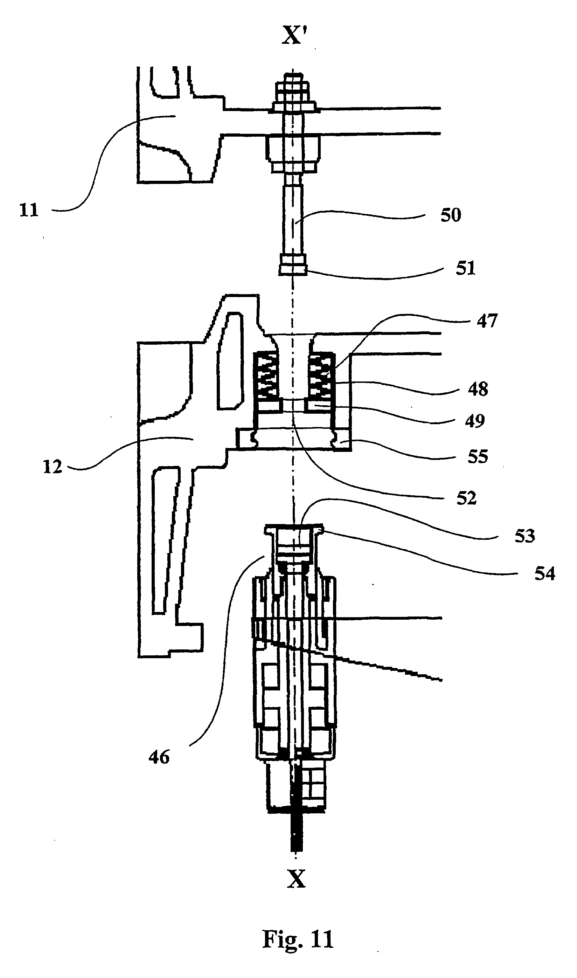

Les figures 1 et 2 montrent des vues partielles d'un même moule interne 10 destiné à servir à la confection d'une ébauche de chenille. Sur la figure 2 montrant une coupe radiale de ce moule 10 (c'est-à-dire contenant l'axe du moule interne), on distingue une première demi-forme 11 cylindrique d'axe confondu avec l'axe du moule interne et une seconde demi-forme 12 cylindrique d'axe également confondu avec l'axe du moule interne, lesdites demi-formes étant représentées dans la position d'assemblage avant le début de la confection d'une nouvelle chenille. Une fois assemblées les demi-formes 11, 12 sont en contact selon une surface de joint 13 formée dans le cas présent de deux surfaces planes 14, 15 perpendiculaires à l'axe du moule interne 10 et d'une surface tronconique 16 de même axe, ladite surface tronconique reliant lesdites surfaces planes; des moyens de liaison (représentés schématiquement sur la figure 11) maintiennent solidaires les demi-formes 11, 12 pendant toute la phase de confection et de moulage de la chenille.

Dans la position montrée avec les figures 1 et 2, les demi-formes 11, 12 formant le moule interne 10 présentent une surface de pose 100 radialement à l'extérieur pour servir de base à la pose des éléments constitutifs de l'ébauche de chenille. Cette surface de pose 100, visible également sur la figure 1 montrant une vue partielle de la surface extérieure du moule interne 10, présente deux parties de pose cylindriques 101 et 102 sensiblement de même largeur axiale et dans la partie médiane une pluralité de cavités 103 régulièrement espacées dans la direction circonférentielle pour le moulage des plots d'entraînement d'une ébauche de chenille. Ces cavités 103 sont délimitées dans la direction circonférentielle par des nervures 104 orientées axialement et dans la direction axiale par des parois latérales 111 et 121, la paroi 111 appartenant à la première demi-forme 11 et l'autre paroi latérale 121 appartenant à l'autre demi-forme 12.

On distingue sur les figures 1 et 2 la trace 130 de la surface de joint 14 sur la surface de pose 100 du moule interne 10; cette trace 130 est axialement située entre la trace du plan médian MM' du moule interne, divisant axialement ledit moule en deux parties de largeurs sensiblement égales, et la paroi latérale 111 de la première demi-forme 11 limitant les cavités 103. Dans le cas présenté, la distance H1 entre la trace 130 et le plan médian MM' est supérieure à 50% de la distance moyenne H entre ledit plan médian et la paroi latérale 111 formée par la première demi-forme 11.

De manière avantageuse, la première demi-forme 11 est obtenue par assemblage d'une partie axialement externe 112 et d'une partie axialement interne 113 en appui l'une sur l'autre selon une surface de joint 114. De même la seconde demi-forme 12 est formée par l'assemblage d'une partie axialement externe 122 et d'une partie axialement interne 123 en appui l'une sur l'autre selon une surface de joint 124. Ainsi, il est aisé d'adapter la largeur totale de la surface de pose 100 à la dimension de la chenille à fabriquer tout en conservant la partie médiane du moule interne, les largeurs respectives des différentes parties 113, 114, 123, 124 pouvant être ou non égales entre elles.

Comme représentée, chaque demi-forme 11, 12 comporte, sous chaque surface de pose 101, 102, un canal 17, 18 s'étendant dans la direction circonférentielle et relié à des moyens non montrés ici pour permettre une circulation d'au moins un fluide à la température voulue pendant la phase de moulage et vulcanisation. Avantageusement, au moins un canal supplémentaire 19 est prévu dans la seconde demi-forme 12 radialement sous les cavités 103 de manière à établir une température de vulcanisation appropriée et éventuellement différente des températures des fluides circulant dans les autres canaux 17, 18 situés sous les autres parties de la chenille afin d'ajuster au mieux la vulcanisation des différentes parties d'une chenille compte tenu des épaisseurs différentes desdites parties.

L'exemple décrit avec les figures 1 et 2 montre des surfaces de pose 101, 102 essentiellement cylindriques mais bien entendu l'invention n'est pas limitée à ce type de surface de forme cylindrique. On peut par exemple employer pour au moins une surface de pose une forme tronconique ou une forme présentant une convexité ou une concavité; préférentiellement le rayon de courbure de cette forme est supérieur à 5 m.

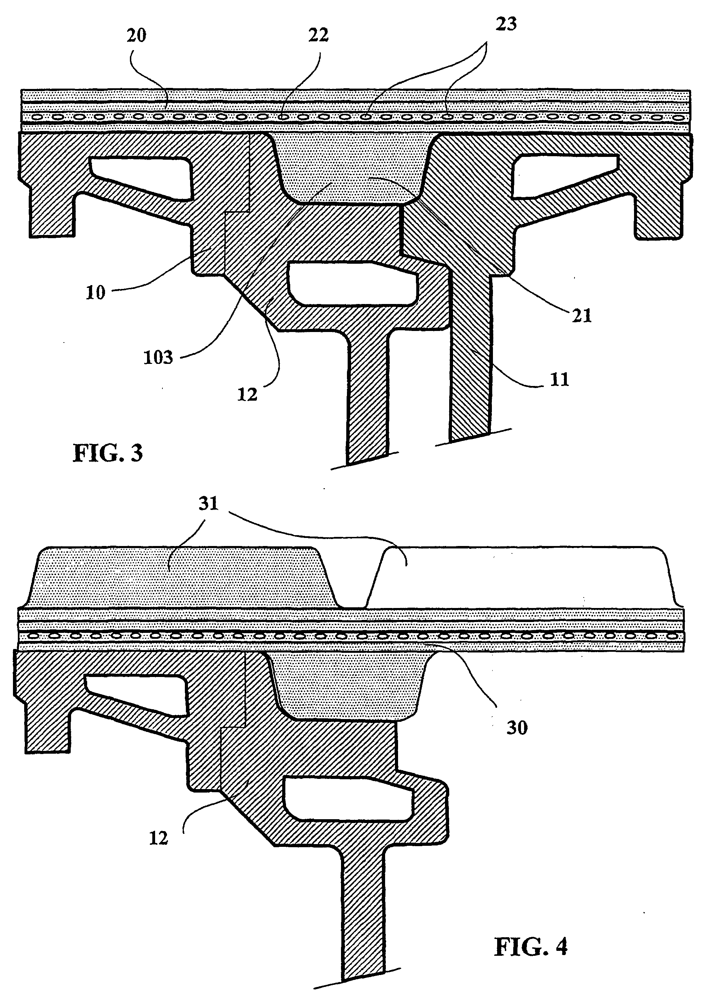

La figure 3 montre, sur une coupe radiale contenant l'axe de rotation du moule interne, une étape de la fabrication d'une ébauche de chenille 20 selon le procédé de l'invention. Sur le moule interne 10, correspondant au moule décrit avec le support des figures 1 et 2, disposé de façon à ce qu'il puisse tourner autour de son axe placé en position verticale, du mélange de gomme a été introduit par extrusion à l'intérieur des cavités 103 pour former des plots d'entraînement 21. Ensuite, les différentes couches de mélange de gomme 22 et armatures 23 sont disposées successivement et par exemple par enroulement radialement à l'extérieur du moule interne de manière à être en contact avec les plots 21 et à les maintenir en place dans les cavités 103.

Pour finir la confection de l'ébauche de chenille, des barrettes de gomme non représentées sur la figure 3 sont disposées radialement à l'extérieur de l'ébauche 20 pour former la sculpture 31 de la chenille visible sur la figure 4 montrant une chenille 30 après moulage et vulcanisation. Dans une variante avantageuse, bien connue des hommes de la technique, la confection de l'ébauche de chenille est achevée par enroulement, de feuilles ou de profilés, de la quantité de gomme nécessaire à la formation des barrettes composant la sculpture.

Après confection de l'ébauche, cet ensemble comprenant le moule interne et ladite ébauche de chenille est placé à l'intérieur d'un moule externe destiné à mouler la sculpture de la chenille. Outre le moulage, la vulcanisation des mélanges de gomme est également réalisée dans cette configuration par apport de calories à la fois par le moule interne et par le moule externe.

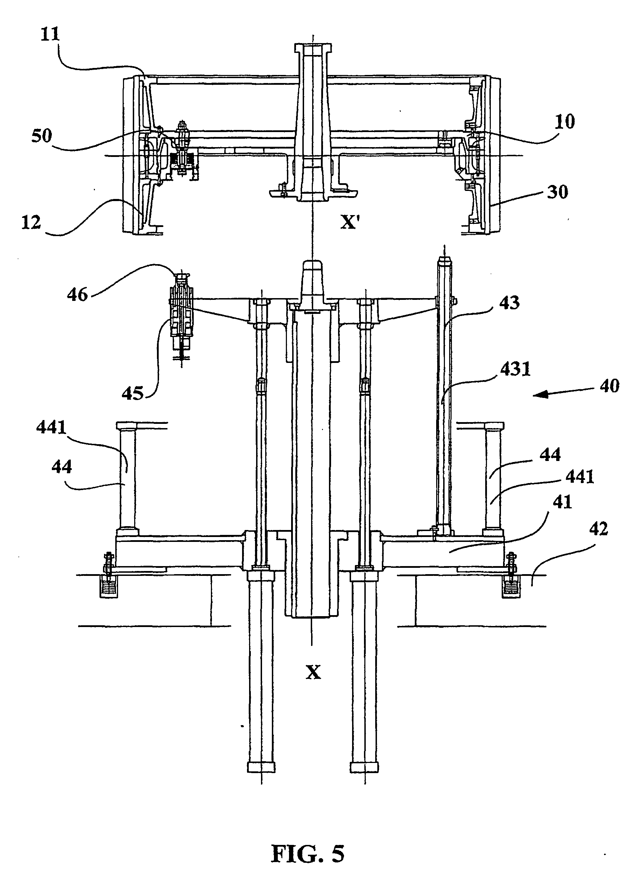

Après moulage et vulcanisation d'une chenille, on procède à son démoulage pour obtenir de façon systématique la configuration représentée à la figure 4 selon laquelle la chenille vulcanisée 30 repose uniquement sur la seconde demi-forme 12, la première demi-forme 11 ayant été retirée. La procédure de démoulage de la chenille hors du moule interne est explicitée avec le concours des figures 5 à 8 montrant des vues en coupe d'un dispositif selon l'invention.

Sur la figure 5, on distingue un dispositif de démoulage 40 d'une chenille vulcanisée 30 portée par le moule interne 10 qui vient d'être décrit avec le support des figures 1 à 4. Le dispositif de démoulage 40 comprend un bâti 41 reposant sur le sol 42 de l'atelier, ledit bâti présentant un axe XX' orienté verticalement. Ce bâti 41 destiné à recevoir le moule interne 10 pourvu d'une chenille 30 après moulage de cette dernière comprend des premiers et seconds moyens de blocage 43, 44 et des moyens de préhension 45 pour manoeuvrer le moule interne 10.

Les premiers moyens de blocage 43 consistent dans le cas présent en une pluralité de tiges 431 fixées au bâti 41 et d'axe vertical parallèle à XX', tandis que les seconds moyens de blocage 44 consistent en une pluralité de tiges 441 fixées elles aussi au bâti 41 et d'axe vertical, les tiges 441 formant les seconds moyen de blocage 44 étant plus courtes que celles formant les premiers moyens de blocage 43.

Les moyens de préhension 45 sont montés coulissant le long de l'axe vertical XX' du bâti 41 pour prendre et déplacer le moule interne 10 le long de l'axe XX' du bâti; ces moyens de préhension 45 sont en outre dotés d'outils 46 capables de réaliser soit le verrouillage de l'assemblage des première et seconde demi-formes 11, 12 du moule interne 10 soit leur déverrouillage pour réaliser le démoulage en agissant sur des organes de liaison 50 desdites demi-formes.

Dans la position de la figure 5, une chenille sur son moule interne est amenée, avec des moyens appropriés, verticalement au dessus des premiers et seconds moyen de blocage, l'axe du moule interne étant confondu avec l'axe XX' du bâti, la seconde demi-forme 12 étant placée verticalement au-dessous de la première demi-forme 11. Les moyens de préhension 45 sont déplacés verticalement vers le haut jusqu'à être en contact avec le moule interne.

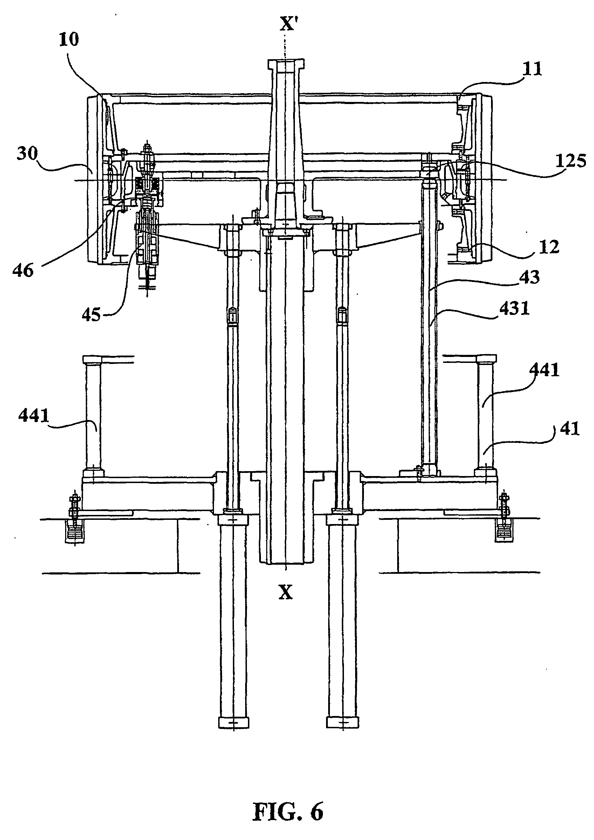

Dans une phase suivante, montrée à la figure 6, le moule interne 10 est amené en appui sur les tiges 431 du premier moyen de blocage 43, lesdites tiges 431 traversant des lumières 125 prévues sur la seconde demi-forme 12 afin que l'extrémité de chaque tige 431 la plus éloignée du bâti soit en contact avec la première demi-forme 11 et pouvoir ainsi limiter la descente gravitaire de cette première demi-forme 11 vers le bâti 10. Dans cette phase, le déverrouillage des première et seconde demi-formes est réalisé grâce aux outils 46 portés par les moyens de préhension 45.

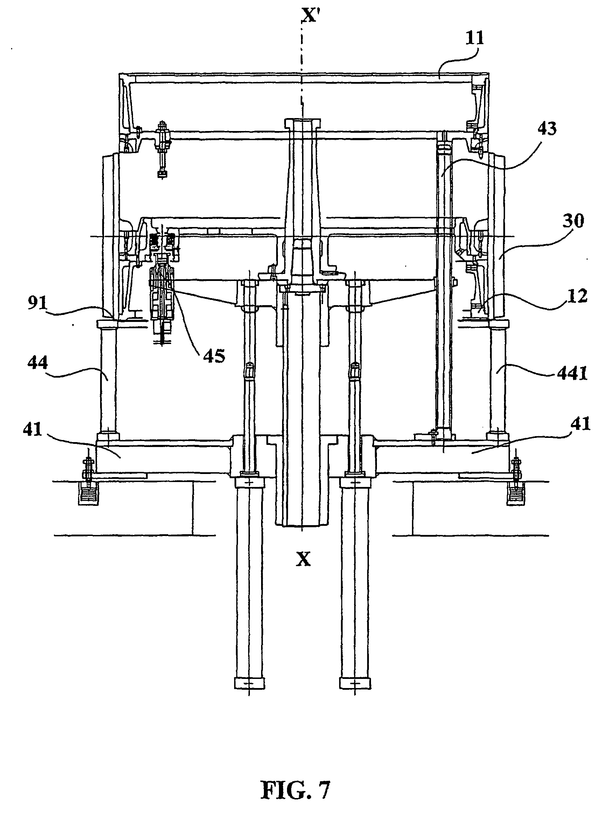

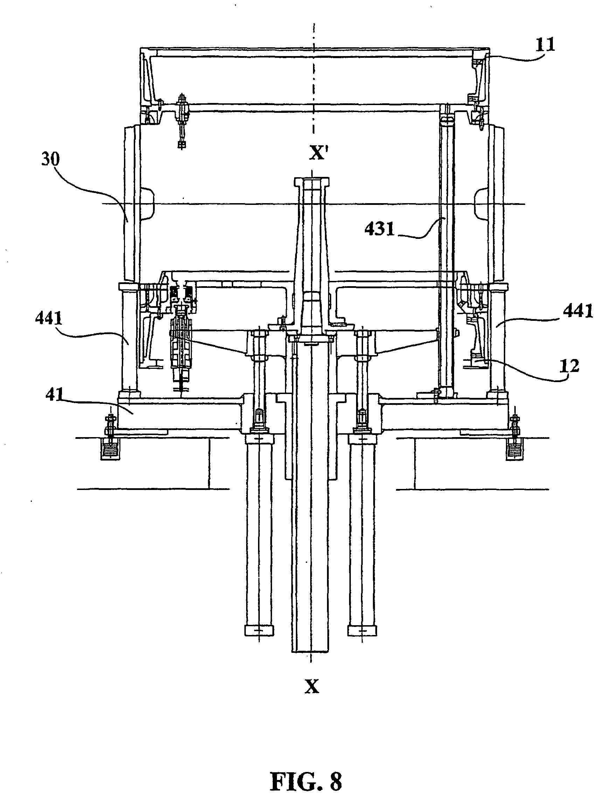

À l'étape suivante, montrée à la figure 7, les moyens de préhension 45 entraînent la seconde demi-forme 12 vers le bâti 41 dans un mouvement parallèle à la direction XX'; dans ce mouvement, la première demi-forme 11 reste en appui contre les premiers moyens de blocage 43 et la chenille 30 suit la seconde demi-forme 12. Ce mouvement est poursuivi jusqu'à ce que dans un premier temps le bord axial inférieur 91 de la chenille 30 soit en appui contre les seconds moyens de blocage 44 et dans un second temps jusqu'à ce que la seconde demi-forme 12 soit extraite par coulissement à l'intérieur de la chenille 30 restant en appui contre les tiges 441 (comme cela est visible sur la figure 8- les références employées sur cette figure 8 renvoyant aux mêmes éléments déjà définis). Enfin, la chenille est évacuée du dispositif de démoulage par tout moyen de manutention adapté.

Avantageusement les tiges 441 des moyens de blocage 44 de la chenille sont prévues pour pouvoir être ajustables en distance par rapport à l'axe XX' du bâti 41 de manière à s'adapter au démoulage de chenilles de dimensions différentes.

L'application du principe décrit avec un dispositif de démoulage comportant un bâti d'axe vertical pour le démoulage d'une chenille, l'axe de ladite chenille étant également vertical est à la portée de l'homme de métier dans le cas où ce dernier souhaite maintenir l'axe de la chenille en position horizontale.

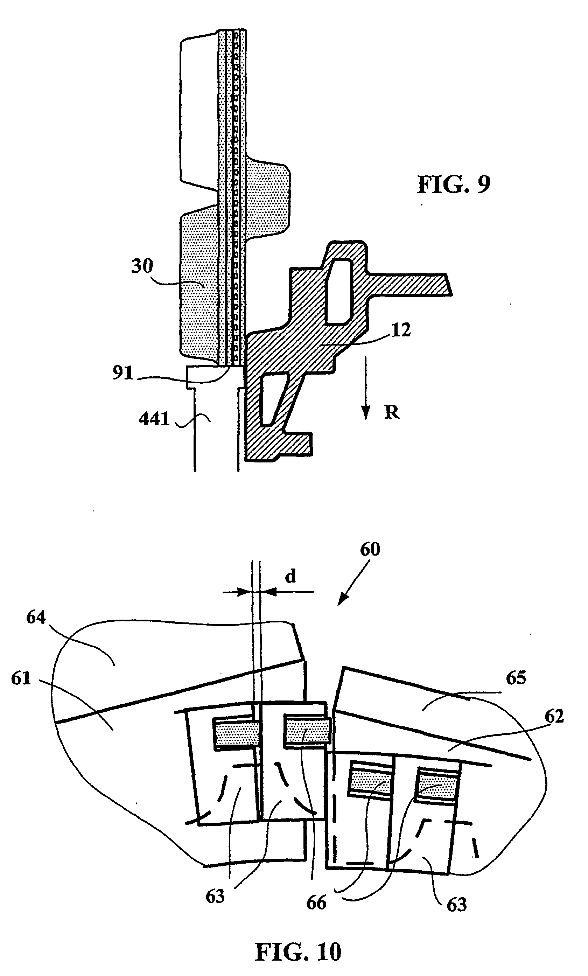

La figure 9 montre une vue partielle de la phase de démoulage sur le dispositif qui vient d'être décrit. Dans cette phase, le bord axialement inférieur 91 de la chenille 30 est en appui contre l'extrémité des tiges 441 tandis que la seconde demi-forme 12 a partiellement coulissé à l'intérieur de ladite chenille suivant la direction verticale symbolisée par la flèche R. Après démoulage complet, des moyens de manutention (non figurés) viennent prendre la chenille pour l'emmener vers un poste de stockage, tandis que les moyens de préhension repoussent vers le haut la seconde demi-forme 12 afin de reconstituer le moule interne en vue de la fabrication d'une nouvelle chenille.

La figure 10 montre une vue partielle de deux secteurs 61, 62 du moule externe 60, chaque secteur comportant une pluralité d'éléments 63 pour le moulage des motifs de la sculpture d'une chenille. Chacun de ces éléments 63 est doté sur une de ses faces en regard d'un élément adjacent d'un organe 66 capable d'exercer une force de répulsion élastique entre deux éléments adjacents 63 pour ajuster au mieux les mouvements desdits éléments au cours de la fermeture et de l'ouverture des secteurs du moule externe et réduire le plus possible les défauts de moulage aux zones de raccordement entre deux éléments. En outre, des moyens non représentés ici permettent de commander l'ouverture et de limiter ladite ouverture en cas de dépassement d'un seuil de pression de moulage d'une chenille résultant par exemple d'une trop grande quantité de mélange par rapport au volume délimité par les moules interne et externe.

Le secteur 61 est montré en position d'ouverture du moule externe pour le démoulage de la chenille et le secteur 62 est représenté en position de fermeture du moule externe pour le moulage de la sculpture de la chenille.

Chaque secteur 61, 62 est respectivement porté par un plateau 64, 65 doté de moyens de chauffage destinés à la vulcanisation des mélanges de gomme.

Sur le secteur 61 montré en position d'ouverture, les éléments sont écartés les uns des autres avec un jeu "d" sensiblement uniforme quel que soit les éléments considérés; ce jeu "d" est réduit ou annulé dans la position de moulage (comme cela est visible avec le secteur 62).

La figure 11 montre une vue partielle en coupe radiale des moyens de liaison permettant de réaliser l'assemblage des première et seconde demi-formes 11 et 12. Sur cette figure 11, on distingue la première et la seconde demi-formes dans une configuration non assemblée correspondant notamment à la figure 7. La première demi-forme 11 porte une tige 50 solidaire et sensiblement alignée avec la direction axiale de ladite demi-forme (correspondant à la direction XX' des figures 5 à 8); cette tige 50 comprend à son extrémité la plus éloignée de ladite demi-forme une couronne 51 de forme oblongue destinée à coopérer avec des moyens de serrage élastiques 47 prévus sur la seconde demi-forme 12. Plus précisément, la seconde demi-forme comprend en vis-à-vis de chaque tige 50 de la première demi-forme un logement 52 traversant de part en part la seconde demi-forme selon une direction parallèle à l'axe du moule interne et destiné à recevoir ladite tige pour réaliser l'assemblage des demi-formes. À l'intérieur du logement 52 sont disposés les moyens de serrage 47 comprenant une pluralité de rondelles Belleville 48 recouvertes par un anneau 49; lesdites rondelles et l'anneau étant prévus pour permettre l'introduction de la couronne d'extrémité 51 de la tige 50 et la tige 50 à l'intérieur du logement 52. L'anneau 49 peut être déplacé à l'intérieur du logement 52 dans la direction XX' selon une course prédéterminée jusqu'à un anneau 55. Le verrouillage de la tige 50 s'effectue, après son introduction dans le logement 52, par une rotation de 90° autour de son axe afin bloquer la couronne 51 contre l'anneau 49. Dans cette position de verrouillage, l'anneau 49 exerce sur la tige 50 par l'intermédiaire de la couronne 51 des efforts tendant à presser la première demi-forme contre la seconde demi-forme. Le réglage de la force de serrage et de l'élasticité dudit serrage est obtenu en prévoyant un nombre de logement 52 approprié et des rondelles Belleville 48 de caractéristiques appropriées. Ce réglage, permet lors du moulage d'une chenille, de réguler et limiter à volonté la pression interne de moulage : en effet, dès qu'un seuil préalablement fixé est atteint, les deux demi-formes peuvent sensiblement s'écarter l'une de l'autre tout en restant solidaires.

Pour réaliser l'opération d'assemblage des demi-formes (et également l'opération de désassemblage), l'outil 46 représenté très schématiquement sur la figure 11 comprend une collerette 54, de forme oblongue, destinée à être bloquée dans l'anneau 55 fixé dans chaque logement 52 dans la seconde demi-forme 12 après rapprochement et rotation d'un quart de tour de la collerette 54 autour de l'axe XX'. Cet outil 46 comprend en outre une tête centrale 53 destinée à coopérer avec la tige 50 pour la mettre en rotation et réaliser la rotation de cette tige afin de permettre sa sortie du logement 52.

Pour réaliser le désassemblage des demi-formes, l'outil 46 est fixé à la seconde demi-forme du moule interne et la collerette 54 de cet outil 46 vient appuyer sur l'anneau 49 pour le déplacer dans son logement en comprimant les rondelles 48. La tête 53 de l'outil 46 fait alors tourner la tige 50 d'un quart de tour pour permettre à la couronne 51 et à la tige 50 de sortir du logement 52.

Le procédé décrit est particulièrement intéressant puisqu'il permet de réaliser le moulage et la vulcanisation d'une chenille en un seul temps tout en garantissant une bonne position des armatures (et en particulier de l'armature comportant des renforts disposés selon la direction circonférentielle) tout en garantissant l'intégrité des moyens de moulage.

L'invention n'est pas limitée aux exemples décrits et représentés et diverses modifications peuvent y être apportées sans sortir de son cadre.

## Revendications

1. Procédé de fabrication d'une chenille (30) formée d'une ceinture continue dans la direction circonférentielle en matériau élastomérique comportant au moins une armature de renforcement dont les renforts, sous forme de fils ou câbles, sont disposés parallèlement les uns aux autres et sont sensiblement alignés avec la direction circonférentielle de la chenille, la ceinture ayant une surface intérieure et une surface extérieure, la surface extérieure étant pourvue d'une sculpture formée d'éléments de relief destinés à être en contact avec le sol, la surface intérieure étant pourvue d'une pluralité de plots d'entraînement régulièrement agencés dans la direction circonférentielle, le procédé comportant les étapes suivantes :
(a) assemblage d'un moule interne (10) formé par une première et une seconde demi-formes (11, 12) cylindriques de même axe, lesdites deux demi-formes pouvant être déplacées l'une par rapport à l'autre dans la direction axiale pour venir en contact l'une sur l'autre selon une surface de joint (14) et former une surface de pose (100) radialement à l'extérieur du moule interne destinée au moulage de la surface radialement interne de la chenille (30), cette surface de pose (100) étant pourvue d'une pluralité de cavités (103) régulièrement espacées pour le moulage des plots d'entraînement de la chenille, chaque cavité (103) étant délimitée dans la direction axiale par une première et une seconde parois latérales, la première paroi latérale (111) appartenant à la première demi-forme (11) et une seconde paroi latérale (121) appartenant à la seconde demi-forme (12), la surface de joint (14) des deux demi-formes étant, sur la surface de pose (100), axialement plus proche de la première paroi latérale (111) que de la seconde paroi latérale (121);
(b) remplissage des cavités (103) avec au moins un mélange approprié pour former les plots d'entraînement;
(c) pose des constituants de la ceinture (mélanges d'élastomère et armatures de renforcement) sur le moule interne et radialement à l'extérieur des plots pour assurer un contact entre mélange de la ceinture et mélange des plots;
(d) pose du mélange de bande de roulement de la chenille radialement à l'extérieur de la ceinture pour former une ébauche de chenille;
(e) transfert de l'ébauche de chenille portée par le moule interne à l'intérieur d'un moule extérieur (60) formé d'une pluralité de secteurs (61, 62), lesdits secteurs présentant en position de moulage une surface de moulage radialement interne pour le moulage de la sculpture de la chenille,
(f) fermeture du moule extérieur (60) par rapprochement radial vers l'axe de rotation des différents secteurs (61, 62) du moule externe pour le moulage et la vulcanisation de la chenille,
(g) après moulage et vulcanisation, ouverture radiale des secteurs (61, 62) du moule extérieur,
(h) transfert du moule interne (10) portant la chenille (30) moulée et vulcanisée jusqu'à un dispositif de démoulage (40);
(i) immobilisation axiale de l'une des demi-formes du moule interne et déplacement dans le sens axial de l'autre demi-forme pour l'éloigner axialement de la demi-forme immobilisée jusqu'à séparation complète, la chenille restant solidaire de la seconde demi-forme (12);
(j) immobilisation dans le sens axial de la chenille (30) et déplacement axial de la seconde demi-forme (12) pour effectuer le démoulage de ladite chenille par coulissement de celle-ci par rapport à ladite demi-forme.

2. Procédé de fabrication d'une chenille (30) selon la revendication 1 **caractérisé en ce que** la distance entre la surface de joint (14) et le plan médian MM' divisant axialement chaque cavité (103) en deux parties sensiblement égales est supérieure à la moitié de la distance entre ce plan médian et la première des surfaces latérales (111) des cavités sur la première demi-forme (11).

3. Procédé de fabrication d'une chenille selon la revendication 2 **caractérisé en ce que** la surface de joint (14) est tangente à la première des surfaces latérales (111) des cavités sur la première demi-forme (11).

4. Procédé de fabrication d'une chenille selon l'une des revendications 1 à 3 **caractérisé en ce que** l'une au moins des demi-formes (11, 12), formant le moule interne (10), comporte des moyens appropriés de serrage et de répulsion élastique entre les demi-formes pour assurer à la fois la tenue mécanique de l'assemblage desdites demi-formes et la prise d'un jeu approprié et uniforme entre lesdites demi-formes pendant le moulage et la vulcanisation dès qu'un seuil de pression de moulage choisi au préalable, est atteint par la gomme à l'intérieur des cavités (103).

5. Procédé de fabrication d'une chenille selon l'une des revendications 1 à 4 **caractérisé en ce que** chaque secteur (61, 62) du moule externe comprend une pluralité d'éléments (63) mobiles individuellement, selon une direction de rapprochement ou d'éloignement de l'axe du moule au moins sur une course finale de moulage, lesdits éléments étant également mobiles les uns par rapport aux autres au moins pendant qu'ils se déplacent le long de ladite course.

6. Procédé de fabrication d'une chenille (30) selon la revendication 5 **caractérisé en ce que** le moule extérieur (60) comporte des moyens (66) assurant une répulsion élastique entre les éléments (63) des secteurs afin d'assurer que ces éléments restent tous à égale distance les uns des autres.

7. Procédé de fabrication d'une chenille (30) selon l'une des revendications 1 à 6 **caractérisé en ce que** le remplissage des cavités (103) du moule interne est réalisé par extrusion ou injection de mélange à l'intérieur desdites cavités avant la pose des autres constituants de l'ébauche de chenille.

8. Procédé de fabrication d'une chenille (30) selon la revendication 7 **caractérisé en ce que** le poste d'extrusion ou injection de mélange dans les cavités est confondu avec le poste de démoulage, de façon que la confection d'une nouvelle ébauche de chenille suive le démoulage d'une chenille moulée et vulcanisée, afin d'optimiser le temps de cycle du procédé.

9. Procédé de fabrication d'une chenille selon l'une des revendications 1 à 8 **caractérisé en ce que** les deux demi-formes (11, 12) du moule interne sont pourvues chacune d'au moins un canal (17, 18, 19) pour la circulation d'un fluide en température pour vulcaniser les mélanges de gomme, au moins un canal (19) étant prévu radialement sous les cavités (103), la température du fluide circulant à l'intérieur de ce canal étant différente de la température des fluides circulant dans les autres canaux.

10. Dispositif de démoulage d'une chenille comportant sur sa surface interne une pluralité de plots moulés sur un moule interne (10) formé de deux demi-formes (11, 12) assemblées et maintenues solidaires par des moyens appropriés (50), ces demi-formes ayant dans la position assemblée le même axe de symétrie et étant en contact sur une surface de joint, chaque demi-forme pouvant être animée d'un mouvement de rapprochement ou d'éloignement de l'autre demi-forme dans la direction axiale, ledit moule interne étant pourvu d'une surface de pose (100) radialement à l'extérieur présentant une pluralité de cavités (103) pour le moulage desdits plots d'entraînement de la chenille, chaque cavité étant limitée axialement par des parois latérales (111, 121), la surface de joint (14) passant axialement entre lesdites parois latérales, le dispositif de démoulage (40) comprenant :
• un bâti (41) pour recevoir le moule interne (10) pourvu d'une chenille (30) après moulage de cette dernière,
• des premiers et seconds moyens de blocage et un moyen de préhension,
• les premiers moyens de blocage (43) étant prévus sur le bâti pour positionner axialement la première demi-forme (11) du moule intérieur et empêcher son déplacement axial par rapport au bâti,
• les seconds moyens de blocage (44) étant prévus sur le bâti pour positionner axialement la chenille vulcanisée (30) et limiter son déplacement axial par rapport au bâti,
• le moyen de préhension (45) permettant, une fois le moule interne (10) avec la chenille vulcanisée (30) en place sur le dispositif et les premiers moyens de blocage (43) bloquant le déplacement axial de la première demi-forme (11) dudit moule, de déplacer axialement la seconde demi-forme (12) pour l'écarter de la première demi-forme et dégager ladite seconde demi-forme de la chenille, ladite chenille étant bloquée axialement par lesdits seconds moyens de blocage.

11. Dispositif de démoulage d'une chenille (30) selon la revendication 10 **caractérisé en ce que** la surface de joint (14) est axialement plus proche d'une desdites parois latérales (111, 121) que de l'autre paroi latérale.

12. Dispositif de démoulage d'une chenille (30) selon la revendication 11 **caractérisé en ce que** la distance entre la surface de joint (14) et le plan médian MM' divisant axialement chaque cavité (103) en deux parties sensiblement égales est supérieure à la moitié de la distance entre ce plan médian et l'une des surfaces latérales (111, 121) des cavités.

13. Dispositif de démoulage d'une chenille (30) selon l'une des revendications 10 à 12 **caractérisé en ce que** le moule interne est monté sur le bâti (41) de façon que son axe soit vertical, la première demi-forme (11) étant située au dessus de la seconde demi-forme (12), et **en ce que** les premiers moyens de blocage (43) sont adaptés pour limiter la descente gravitaire de la première demi-forme (11) vers le bâti (41), les seconds moyens de blocage (44) étant adaptés pour limiter la descente gravitaire de la chenille (30) vers le bâti (41) et la désolidariser de la seconde demi-forme.

14. Dispositif de démoulage d'une chenille (30) selon la revendication 13 **caractérisé en ce que** les premiers moyens de blocage (43) pour positionner axialement la première demi-forme (11) consistent en une pluralité de tiges (431) d'axe vertical, ces tiges (431) étant fixées au bâti, des lumières (125) étant prévues sur la seconde demi-forme (12) pour le passage desdites tiges afin d'être en contact avec la première demi-forme (11) et pouvoir limiter sa descente gravitaire vers le bâti.

## Claims

1. A process for manufacturing a crawler track (30) formed of a belt, continuous in the circumferential direction, of elastomeric material comprising at least one reinforcing means whose reinforcements, in the form of cords or cables, are arranged parallel to one another and are substantially aligned with the circumferential direction of the crawler track, the belt having an inner surface and an outer surface, the outer surface being provided with a tread pattern formed of elements in relief intended to be in contact with the ground, the inner surface being provided with a plurality of driving studs arranged regularly in the circumferential direction, the process comprising the following stages:
(a) assembly of an internal mould (10) formed of a first cylindrical mould half and a second cylindrical mould half (11, 12) with the same axis, said two mould halves being capable of displacement relative to one another in the axial direction so as to come into contact with one another along a joint surface (14) and form a laying surface (100) radially to the outside of the internal mould intended for moulding of the radially inner surface of the crawler track (30), this laying surface (100) being provided with a plurality of regularly spaced cavities (103) for moulding the driving studs of the crawler track, each cavity (103) being defined in the axial direction by a first and a second lateral wall, the first lateral wall (111) belonging to the first mould half (11) and a second lateral wall belonging to the second mould half (12), the joint surface (14) of the two mould halves being, on the laying surface (100), axially closer to the first lateral wall (111) than to the second lateral wall (121);
(b) filling of the cavities (103) with at least one mix suitable for forming the driving studs;
(c) laying of the constituents of the belt (mixes of elastomer and reinforcing means) on the internal mould and radially to the outside of the studs to ensure contact between the belt mix and the stud mix;
(d) laying of the crawler track tread mix radially to the outside of the belt to form a crawler track blank;
(e) transfer of the crawler track blank carried by the internal mould into an external mould (60) formed of a plurality of sectors (61, 62), said sectors having, in the moulding position, a radially inner moulding surface for moulding the tread pattern of the crawler track;
(f) closure of the external mould (60) by bringing the different sectors (61, 62) of the external mould together radially towards the axis of rotation for moulding and vulcanisation of the crawler track,
(g) after moulding and vulcanisation, radial opening of the sectors (61, 62) of the external mould,
(h) transfer of the internal mould (10) carrying the moulded and vulcanised crawler track (30) to a stripping device (40);
(i) axial immobilisation of one of the mould halves of the internal mould and displacement in the axial direction of the other mould half to move it axially away from the immobilised mould half until separation is complete, the crawler track remaining integral with the second mould half (12);
(j) immobilisation in the axial direction of the crawler track (30) and axial displacement of the second mould half (12) to effect stripping of said crawler track by sliding the latter relative to said mould half.

2. A process for manufacturing a crawler track (30) according to claim 1, **characterised in that** the distance between the joint surface (14) and the median plane MM' axially dividing each cavity (103) into two substantially equal parts is greater than half the distance between this median plane and the first of the lateral surfaces (111) of the cavities on the first mould half (11).

3. A process for manufacturing a crawler track according to claim 2, **characterised in that** the joint surface (14) is at a tangent to the first of the lateral surfaces (111) of the cavities on the first mould half (11).

4. A process for manufacturing a crawler track according to one of claims 1 to 3, **characterised in that** at least one of the mould halves (11, 12), forming the internal mould (10), comprises suitable elastic repulsion and clamping means between the mould halves to ensure both the mechanical strength of the assembly of said mould halves and the maintenance of suitable, uniform clearance between said mould halves during moulding and vulcanisation once a pre-selected moulding pressure threshold is reached by the rubber inside the cavities (103).

5. A process for manufacturing a crawler track according to one of claims 1 to 4, **characterised in that** each sector (61, 62) of the external mould comprises a plurality of elements (63), which are individually mobile in a direction towards or away from the axis of the mould at least over a final moulding stroke, said elements also being mobile relative to one another at least while they move along said stroke.

6. A process for manufacturing a crawler track (30) according to claim 5, **characterised in that** the external mould (60) comprises means (66) ensuring elastic repulsion between the elements (63) of the sectors in order to ensure that these elements all remain equidistant from one another.

7. A process for manufacturing a crawler track (30) according to one of claims 1 to 6, **characterised in that** filling of the cavities (103) of the internal mould is performed by extrusion or injection of the mix into said cavities prior to laying of the other constituents of the crawler track blank.

8. A process for manufacturing a crawler track (30) according to claim 7, **characterised in that** the station for extruding or injecting the mix into the cavities is combined with the stripping station, in such a way that building of a new crawler track follows stripping of a moulded and vulcanised crawler track, so as to optimise the cycle time of the process.

9. A process for manufacturing a crawler track according to one of claims 1 to 8, **characterised in that** the two mould halves (11, 12) of the internal mould are each provided with at least one duct (17, 18, 19) for circulation of a fluid at a temperature suitable for vulcanising the rubber mixes, at least one duct (19) being provided radially beneath the cavities (103), the temperature of the fluid circulating inside this duct being different from the temperature of the fluids circulating in the other ducts.

10. A stripping device for a crawler track comprising on its inner surface a plurality of studs moulded on an internal mould (10) formed of two mould halves (11, 12) fitted together and kept firmly connected by suitable means (50), these mould halves having in the assembled position the same axis of symmetry and being in contact over a joint surface, it being possible to impart to each mould half a movement towards or away from the other mould half in the axial direction, said internal mould being provided with a laying surface (100) radially to the outside having a plurality of cavities (103) for moulding said driving studs of the crawler track, each cavity being delimited axially by lateral walls (111, 121), the joint surface (14) passing axially between said lateral walls, the stripping device (40) comprising:
• a frame (41) for receiving the internal mould (10) provided with a crawler track (30) after moulding of the latter,
• first and second blocking means and a gripping means,
• the first blocking means (43) being provided on the frame to effect axial positioning of the first mould half (11) of the internal mould and to prevent axial displacement thereof relative to the frame,
• the second blocking means (44) being provided on the frame to effect axial positioning of the vulcanised crawler track (30) and to limit axial displacement thereof relative to the frame,
• the gripping means (45) making it possible, once the internal mould (10) with the vulcanised crawler track (30) is in place on the device and the first blocking means (43) are blocking axial displacement of the first mould half (11) of said mould, to move the second mould half (12) axially so as to separate it from the first mould half and disengage said second mould half from the crawler track, said crawler track being blocked axially by said second blocking means.

11. A stripping device for a crawler track (30) according to claim 10, **characterised in that** the joint surface (14) is axially closer to one of said lateral walls (111, 121) than to the other lateral wall.

12. A stripping device for a crawler track (30) according to claim 11, **characterised in that** the distance between the joint surface (14) and the median plane MM' axially dividing each cavity (103) into two substantially equal parts is greater than half the distance between this median plane and one of the lateral surfaces (111, 121) of the cavities.

13. A stripping device for a crawler track (30) according to one of claims 10 to 12, **characterised in that** the internal mould is mounted on the frame (41) in such a way that its axis is vertical, the first mould half (11) being situated above the second mould half (12), and **in that** the first blocking means (43) are adapted to limit the gravitational descent of the first mould half (11) towards the frame (41), the second blocking means (44) being adapted to limit the gravitational descent of the crawler track (30) towards the frame (41) and to disconnect it from the second mould half.

14. A stripping device for a crawler track (30) according to claim 13, **characterised in that** the first blocking means (43) for axial positioning of the first mould half (11) consist of a plurality of rods (431) with a vertical axis, these rods (431) being fixed to the frame, slots (125) being provided on the second mould half (12) for passage of said rods so as to be in contact with the first mould half (11) and to be able to limit the gravitational descent thereof towards the frame.

## Patentansprüche

1. Verfahren zur Herstellung einer Gleiskette (30), die von einem in Umfangsrichtung durchgehenden Gürtel aus Elastomermaterial geformt ist, der mindestens eine Verstärkungsbewehrung aufweist, deren Verstärkungen in Form von Drähten oder Seilen parallel zueinander angeordnet sind und im wesentlichen auf die Umfangsrichtung der Gleiskette ausgerichtet sind, wobei der Gürtel eine Innenoberfläche und eine Außenoberfläche aufweist, die Außenoberfläche mit einem Profil versehen ist, das von vorspringenden Elementen gebildet ist, die dazu bestimmt sind, mit dem Boden in Berührung zu gelangen, und die Innenoberfläche mit einer Vielzahl von Antriebsvorsprüngen versehen ist, die regelmäßig in Umfangsrichtung angeordnet sind, wobei das Verfahren die folgenden Schritte aufweist:
(a) der Zusammenbau eines inneren Formwerkzeugs (10), das von einem ersten und einem zweiten, zylindrischen Halb-Formwerkzeug (11, 12) mit der selben Achse gebildet ist, wobei die genannten zwei Halb-Formwerkzeuge zueinander in der axialen Richtung versetzt werden können, um miteinander in einer Verbindungsoberfläche (14) in Berührung zu kommen und eine Auflegeoberfläche (100) radial auf der Außenseite des inneren Formwerkzeugs zu bilden, die zum Abformen der radial inneren Oberfläche der Gleiskette (30) bestimmt ist, wobei diese Auflegeoberfläche (100) mit einer Vielzahl von Hohlräumen (103) zum Abformen der Antriebsvorsprünge versehen ist, die regelmäßig beabstandet sind, jeder Hohlraum (103) in axialer Richtung durch eine erste und eine zweite Seitenwand begrenzt ist, die erste Seitenwand (111) zum ersten der Halb-Formwerkzeuge (11) gehört und die zweite Seitenwand (121) zum zweiten der Halb-Formwerkzeuge (12) gehört, und die Verbindungsoberfläche (14) der beiden Halb-Formwerkzeuge auf der Auflegeoberfläche (100) axial der ersten Seitenwand (111) näher ist als der zweiten Seitenwand (121);
(b) das Füllen der Hohlräume (103) mit mindestens einer Mischung, die zur Bildung der Antriebsvorsprünge geeignet ist;
(c) das Auflegen der Bestandteile des Gürtels (Elastomermischungen und Verstärkungsbewehrungen) auf dem inneren Formwerkzeug und radial auf der Außenseite der Vorsprünge, um die Berührung zwischen der Mischung des Gürtels und der Mischung der Vorsprünge sicherzustellen;
(d) das Auflegen der Laufflächenmischung der Gleiskette radial auf der Außenseite des Gürtels, um den Rohling der Gleiskette fertigzustellen;
(e) das Überführen des Gleiskettenrohlings, der von dem inneren Formwerkzeug getragen ist, in das Innere eines äußeren Formwerkzeugs (60), das von einer Vielzahl von Sektoren gebildet (61, 62) ist, wobei die genannten Sektoren in der Abformlage eine radial innere Abformoberfläche für das Abformen des Profils der Gleiskette aufweisen.
(f) das Schließen des äußeren Formwerkzeugs (60) durch radiales Annähern der verschiedenen Sektoren (61, 62) des äußeren Formwerkzeugs gegen die Drehachse für das Abformen und Vulkanisieren der Gleiskette,
(g) nach dem Abformen und Vulkanisieren, das radiale Öffnen der Sektoren (61, 62) des äußeren Formwerkzeugs,
(h) das Überführen des inneren Formwerkzeugs (10), das die abgeformte und vulkanisierte Gleiskette (30) trägt, bis zu einer Ausformvorrichtung (40);
(i) das axiale Festlegen der einen der Halb-Formwerkzeugs des inneren Formwerkzeuges und das Versetzen in axialer Richtung des anderen der Halb-Formwerkzeuge, um es axial von dem festgelegten Formwerkzeug bis zur vollständigen Trennung zu entfernen, wobei die Gleiskette fest mit dem zweiten Halb-Formwerkzeug (12) verbunden bleibt; und
(j) das unbewegliche Festlegen der Gleiskette (30) in axialer Richtung und das axiale Entfernen des zweiten Halb-Formwerkzeugs (12), um das Ausformen der Gleiskette durch Verschieben dieser bezüglich des zweiten Halb-Formwerkzeugs zu bewirken.

2. Verfahren zur Herstellung einer Gleiskette (30) nach Anspruch 1, **dadurch gekennzeichnet, daß** der Abstand zwischen der Verbindungsoberfläche (14) und der Mittelebene MM', die axial jeden Hohlraum (103) in im wesentlichen zwei gleiche Teile teilt, größer ist als die Hälfte des Abstands zwischen dieser Mittelebene und der ersten der seitlichen Oberflächen (111) der Hohlräume auf dem ersten Halb-Formwerkzeug (11).

3. Verfahren zur Herstellung einer Gleiskette nach Anspruch 2, **dadurch gekennzeichnet, daß** die Verbindungsoberfläche (14) die erste der seitlichen Oberflächen (111) der Hohlräume auf dem ersten Halb-Formwerkzeug (11) tangiert.

4. Verfahren zur Herstellung einer Gleiskette nach einem der Ansprüche 1 bis 3, **dadurch gekennzeichnet, daß** mindestens eines der Halb-Formwerkzeuge (11, 12), die das innere Formwerkzeug (10) bilden, Mittel aufweist, die zum Festklemmen und zur elastischen Abstoßung zwischen den beiden Halb-Formwerkzeugen geeignet sind, um gleichzeitig den mechanischen Halt der Gruppe der beiden Halb-Formwerkzeuge und die Aufnahme eines geeigneten und gleichförmigen Spiels zwischen den genannten Halb-Formwerkzeugen während des Abformens und der Vulkanisation sicherzustellen, sobald eine Abformdruck-Schwelle, die vorab gewählt ist, durch den Gummi im Inneren der Hohlräume (103) erreicht ist.

5. Verfahren zur Herstellung einer Gleiskette nach einem der Ansprüche 1 bis 4, **dadurch gekennzeichnet, daß** jeder Sektor (61, 62) des äußeren Formwerkzeugs eine Vielzahl von Elementen (63) aufweist, die individuell in einer Annäherungs- oder Entfernungsrichtung von der Achse des Formwerkzeugs über einen Endverlauf der Abformung beweglich sind, wobei die genannten Elemente auch zueinander mindestens dann beweglich sind, während sie sich längs des genannten Verlaufes versetzen.

6. Verfahren zur Herstellung einer Gleiskette (30) nach Anspruch 5, **dadurch gekennzeichnet, daß** das äußere Formwerkzeug (60) Mittel (66) aufweist, die eine elastische Abstoßung zwischen den Elementen (63) der Sektoren sicherstellen, um sicherzustellen, daß diese Elemente alle bei gleichem Abstand zueinander verbleiben.

7. Verfahren zur Herstellung einer Gleiskette (30) nach einem der Ansprüche 1 bis 6, **dadurch gekennzeichnet, daß** das Füllen der Hohlräume (103) des inneren Formwerkzeugs durch Extrusion oder Injektion von Mischung im Inneren der genannten Hohlräume vor dem Auflegen der anderen Bestandteile des Gleiskettenrohlings durchgeführt wird.

8. Verfahren zur Herstellung einer Gleiskette (30) nach Anspruch 7, **dadurch gekennzeichnet, daß** die Station zur Extrusion oder Injektion von Mischung in die Hohlräume zusammenfällt mit der Ausformstation, so daß die Konfektion eines neuen Gleiskettenrohlings dem Ausformen einer abgeformten und vulkanisierten Gleiskette folgt, um die Zeit für einen Zyklus des Verfahrens zu optimieren.

9. Verfahren zur Herstellung einer Gleiskette nach einem der Ansprüche 1 bis 8, **dadurch gekennzeichnet, daß** die beiden Halb-Formwerkzeuge (11, 12) des inneren Formwerkzeugs jedes mit mindestens einem Kanal (17, 18, 19) für den Umlauf eines temperierten Strömungsmittels versehen sind, um die Gummimischungen zu vulkanisieren, wobei mindestens ein Kanal (19) radial unter den Hohlräumen (103) vorgesehen ist, und die Temperatur des Strömungsmittels, das im Inneren dieses Kanals umläuft, unterschiedlich ist von der Temperatur der Strömungsmittel, die in den anderen Kanälen umlaufen.

10. Vorrichtung zum Ausformen einer Gleiskette, die an ihrer Innenoberfläche eine Vielzahl von Vorsprüngen aufweist, die auf einem inneren Formwerkzeug (10) abgeformt sind, das aus zwei Halb-Formwerkzeugen (11, 12) gebildet ist, die zusammengefügt und durch geeignete Mittel (50) fest zusammengehalten sind, wobei diese Halb-Formwerkzeuge in der zusammengefügten Lage die selbe Symmetrieachse haben und auf einer Verbindungsoberfläche in Berührung stehen, jedes Halb-Formwerkzeug zu einer Annäherungsbewegung zum und einer Entfernungsbewegung vom anderen Halb-Formwerkzeug in axialer Richtung angeregt werden kann, das genannte innere Formwerkzeug radial auf der Außenseite mit einer Auflegeoberfläche (100) versehen ist, die eine Vielzahl von Hohlräumen (103) zum Abformen der genannten Antriebsvorsprünge der Gleiskette aufweist, jeder Hohlraum axial durch Seitenwände (111, 121) begrenzt ist, die Verbindungsoberfläche (14) axial zwischen den genannten Seitenwänden hindurchläuft und die Ausformvorrichtung (40) versehen ist mit:
• einem Maschinengestell (41), um das innere Formwerkzeug (10), das mit einer Gleiskette (30) versehen ist, nach deren Abformen aufzunehmen, und
• ersten und zweiten Sperrmitteln und einem Greifmittel,
• wobei die ersten Sperrmittel (43) auf dem Maschinengestell vorgesehen sind, um axial das erste Halb-Formwerkzeug (11) des inneren Formwerkzeugs zu positionieren und seine axiale Verlagerung bezüglich des Maschinengestells zu begrenzen,
• die zweiten Sperrmittel (44) auf dem Maschinengestell vorgesehen sind, um die vulkanisierte Gleiskette (30) axial anzuordnen und ihre axiale Verlagerung bezüglich des Maschinengestells zu begrenzen, und
• es die Greifmittel (45) gestatten, wenn das innere Formwerkzeug (10) mit der vulkanisierten Gleiskette (30) sich erst einmal an seinem Platz auf der Vorrichtung befindet und die ersten Sperrmittel (43) die axiale Verlagerung des ersten Halb-Formwerkzeugs (11) des genannten Formwerkzeugs sperren, das zweite Halb-Formwerkzeug (12) axial zu versetzen, um es axial vom ersten Halb-Formwerkzeug zu entfernen und das zweite Halb-Formwerkzeug aus dem Eingriff mit der Gleiskette zu lösen,
wobei die Gleiskette axial durch die genannten, zweiten Sperrmittel gesperrt ist.

11. Vorrichtung zum Ausformen einer Gleiskette (30), nach Anspruch 10, **dadurch gekennzeichnet, daß** die Verbindungsoberfläche (14) axial einer der genannten Seitenwände (111, 121) näher ist als der anderen Seitenwand.

12. Vorrichtung zum Ausformen einer Gleiskette (30), nach Anspruch 11, **dadurch gekennzeichnet, daß** der Abstand zwischen der Verbindungsoberfläche (14) und der Mittelebene MM', die axial jeden Hohlraum (103) in zwei im wesentlichen gleiche Teile teilt, größer ist als die Hälfte des Abstandes zwischen dieser Mittelebene und einer der Seitenoberflächen (111, 112) der Hohlräume.

13. Vorrichtung zum Ausformen einer Gleiskette (30), nach einem der Ansprüche 10 bis 12, **dadurch gekennzeichnet, daß** das innere Formwerkzeug auf dem Maschinengestell (41) derart angebracht ist, daß seine Achse vertikal verläuft, wobei das erste Halb-Formwerkzeug (11) über dem zweiten Halb-Formwerkzeug (12) liegt, und daß die ersten Sperrmittel (43) dazu eingerichtet sind, den schwerkraftbedingten Abstieg des ersten Halb-Formwerkzeugs (11) zum Maschinengestell (41) hin zu begrenzen, während die zweiten Sperrmittel (44) dazu eingerichtet sind, den schwerkraftbedingten Abstieg der Gleiskette (30) zum Maschinengestell (41) hin zu begrenzen und die feste Verbindung des zweiten Halb-Formwerkzeugs zu lösen.

14. Vorrichtung zum Ausformen einer Gleiskette (30), nach Anspruch 13, **dadurch gekennzeichnet, daß** die ersten Sperrmittel (43) zum axialen Positionieren des ersten Halb-Formwerkzeugs (11) aus einer Vielzahl von Stangen (431) mit vertikaler Achse bestehen, diese Stangen (431) am Maschinengestell befestigt sind und Öffnungen (125) auf dem zweiten Halb-Formwerkzeug (12) für den Durchgang der genannten Stangen vorgesehen sind, um in Berührung mit dem ersten Halb-Formwerkzeug (11) zu stehen und seinen schwerkraftbedingten Abstieg zum Maschinengestell hin zu begrenzen.
